# NEUE EUROPÄISCHE PATENTSCHRIFT

(11) **EP 1 319 545 B2**
(45) Veröffentlichungstag und Bekanntmachung des Hinweises auf die Entscheidung über den Einspruch: **25.08.2010**
(45) Hinweis auf die Patenterteilung: 05.09.2007
(21) Anmeldenummer: 01129821.3
(22) Anmeldetag: 14.12.2001
(51) Int. Cl.: B60K 15/04

(54) **Vorrichtung zur Betankung von Dieselfahrzeugen**
Arrangement for refueling a diesel vehicle
Dispositif de remplissage pour véhicules diesel

(43) Veröffentlichungstag der Anmeldung: 18.06.2003
(73) Patentinhaber: Ford Global Technologies, LLC, Dearborn, MI 48126 (US)
(72) Erfinder: Mohr, Christian, 50859 Köln (DE); Odermatt, Manfred, 53773 Hennef (DE); Hahn, Joachim, 50126 Bergheim (DE)
(74) Vertreter: Drömer, Hans-Carsten

(56) Entgegenhaltungen:
- EP-A1- 1 262 355
- EP-A1- 1 319 545
- DE-A- 3 641 274
- DE-A1- 3 641 274
- DE-A1- 10 126 207
- DE-U1- 8 528 368
- FR-A1- 2 741 014
- GB-A- 2 230 765
- GB-A- 2 230 765
- US- - 4 034 784
- US-A- 3 880 317
- US-B1- 6 302 169

## Beschreibung

Die Erfindung betrifft eine in einen Einfüllstutzen eines Behälters mit großem Durchmesser einsetzbare Vorrichtung als Sperre für das Befüllen des Behälters durch ein Füllrohr kleinen Durchmessers nach dem Oberbegriff des Anspruchs 1.

Aus der GB 2 230 765 (beinhaltet die Merkmale des Oberbegriffs des Anspruchs 1) ist eine Sperrvorrichtung bekannt, die in einem Einfüllstutzen eines Behälters eingesetzt wird. Füllrohre mit großem Durchmesser werden von der Sperrvorrichtung durchgelassen, während Füllrohre mit kleinem Durchmesser von der Sperrvorrichtung gesperrt werden. Erreicht wird dies mittels von der Seite her in den Füllstutzen ragender, verschiebbarer flexibler Teile, die eine Querschnittsverjüngung auf einen vorbestimmbaren Durchmesser bewirken, und die einen sich verjüngenden Abschnitt im Einfüllstutzen bilden, dessen Abmessung zur Füllöffnung hin dem großen Durchmesser und zum Inneren des Behälters hin dem kleinen Durchmesser eines Füllrohres entspricht. Der Abschnitt für die Einschubtiefe des Füllrohres mit kleinem Durchmesser endet in einer querliegenden Sperre, wobei die Teile an der Halterung flexibel schwenkbar befestigt sind. Wird das kleine Füllrohr eingeführt, werden die flexiblen Teile vom Füllrohr nicht nach außen gedrückt. Somit verhindern die querliegenden Sperren einen weiteres Einführend des Füllrohres. Ein Füllrohr mit großem Durchmesser dagegen drückt die flexiblen Teile nach außen, so daß die querliegenden Sperren die Durchtrittsöffnung freigeben und das Füllrohr weiter eingeführt werden kann.

Aus der DE 196 39 825 A1 ist eine Bleifreisperre zum Einsatz in einen Tankeinfüllstutzen bekannt. Diese Bleifreisperre weist eine Aufnahme für das Rohr einer Flüssigkeitstreibstoffzapfpistole und eine lösbare Querschnittsverjüngung, die in einer Bleifreistellung einen wirksamen Durchmesser hat, der größer ist als das Rohr einer Bleifreizapfpistole und kleiner ist als das Rohr für eine Zapfpistole für Diesel oder verbleiten Kraftstoff, und die in einem gelösten Zustand eine Verbleit/Dieselanordnung bildet und hierbei einen wirksamen Durchmesser freigibt, der größer ist als das Rohr der Zapfpistole für Diesel oder verbleiten Kraftstoff, wobei die Querschnittsverjüngung Teil eines Hebelsystems ist, der zwischen der Bleifreistellung und der Verbleit/Dieselanordnung schwenkbar ist. Dieses Schwenken wird durch Auslösen mittels eines Werkzeuges, insbesondere eines Stiftes durchgeführt und ist dazu bestimmt, daß ein und dieselbe Vorrichtung für Kraftfahrzeuge benutzt werden kann, die bei Montage des Kraftstoffbehälters die Entscheidung verlangt, ob dieser Behälter für ein Fahrzeug mit Betrieb durch bleifreien Kraftstoff, verbleiten Kraftstoff oder Dieselkraftstoff eingesetzt werden soll. Die Verriegelungsstellung wird also einmalig während der Montage des Kraftstoffbehälters mit dem Bleifreieinsatz oder einem anderen Einsatz eingestellt und verbleibt dann so im Kraftfahrzeug.

Aus der WO 90/14244 ist ein Einfüllstutzen mit einer Rohrdichtung bekannt, die den Einfüllstutzen bis auf eine Entlüftungsöffnung nach Befüllen mit Kraftstoff luftdicht verschließt. Diese Dichtung ist als trichterförmige Kunststoff- oder Gummimanschette ausgebildet, wobei der Trichter am verjüngten Ende durch eine Ringfeder geschlossen gehalten wird. Eine einzuführende Zapfpistole, gleich welchen Durchmessers, drückt gegen die Wandung des Trichters und öffnet so den Trichterboden, damit Kraftstoff in den Behälter eingefüllt werden kann. Eine Sperre für bestimmte Durchmesser von Füllrohren ist damit nicht verbunden, sondern lediglich ein gasdichter Verschluß des Stutzens nach dem Einfüllen.

Von daher liegt der Erfindung das Problem zugrunde, eine Vorrichtung zur Verwendung im Einfüllstutzen des Behälters, insbesondere eines Kraftfahrzeuges vorzuschlagen, die ein versehentliches Befüllen eines für Dieselkraftstoff vorgesehenen Behälters mit einem anderen Kraftstoff verhindert, wobei unterstellt wird, daß das Füllrohr für Diesel einen größeren Durchmesser hat, als das Füllrohr für andere Kraftstoffarten.

Das Problem wird erfindungsgemäß durch die Merkmale der Ansprüche 1 und 13 gelöst. Weiterbildungen der Erfindung sind in den Unteransprüchen erfaßt.

Es ist bekannt, daß es unmöglich ist, Diesel oder verbleites Benzin in einen Behälter eines Kraftfahrzeuges zu füllen, das für einen Betrieb mit bleifreiem Benzin vorgesehen ist. Weltweit haben handelsübliche Zapfsäulen für Bleifrei-Benzin einen geringeren Durchmesser als Zapfpistolen für verbleites Benzin oder Dieselbenzin. Das Einfüllen von Benzin in einen durch Diesel betriebenes Kraftfahrzeug führt zur Zerstörung der Einspritzpumpe oder des Motors. Andererseits ist zu berücksichtigen, daß im Winter zur Verflüssigung des Diesels manche Fahrer dem Diesel Benzin beimischen.

Dabei werden die querliegende Sperre bzw. die Vorsprünge mit einer elastischen Platte versehen, die einteilig ist oder aus mehreren Teilen besteht, die im entlasteten Zustand eine im wesentlichen geschlossene Kreisringfläche bilden und aus elastischem Material bestehen.

Diese Platte wird vorzugsweise unter der Sperre oder den Vorsprüngen angebracht, z.B. durch Kleben, Verschweißen oder Verschrauben. Eine derartige elastische Platte wird von der richtigen Fülleinrichtung, einem Füllrohr großen Durchmessers zusammen mit den Teilen aufgebogen bzw. weg geschwenkt, so daß das Füllrohr auch die elastische Platte durchstoßen kann, wenn auch die Rückstellkraft der elastischen Platte überwunden werden muß. Im Falle des Versuches, ein kleines Füllrohr einzuschieben wird dieses Füllrohr von der Sperre bzw. den Vorsprüngen gestoppt und bei dem Versuch die Zapfpistole auszulösen, erzeugt die elastische Platte einen Rückstau, infolge dessen die handelsüblichen Zapfpistolen mit ihrer Abschaltautomatik den Durchfluß für große Massenströme sperren.
Für Winterbetrieb, bei dem ein geringer Zusatz an Benzin zum Diesel erwünscht ist, kann diese Eigenschaft der Platte in Kombination mit der Abschaltautomatik genutzt werden, um geringe Mengen Bleifrei-Benzin einzufüllen, trotz der Sperreinrichtung.

Bei einer Variante wird eine in einen Einfüllstutzen mit großem Durchmesser eines Behälters einsetzbare Vorrichtung vorgeschlagen die als Sperre für das Befüllen des Behälters durch ein Füllrohr kleinen Durchmessers dient und die eine von der Seite her in den Einfüllstutzen ragende, dessen Querschnittsverjüngung auf einen vorbestimmbaren Durchmesser bewirkende, verschiebbare Sicherungseinrichtung aufweist, dadurch gekennzeichnet, daß die Sicherungseinrichtung aus mehreren an der Innenwand des Einfüllstutzens mittels einer flexiblen Halterung befestigten, nicht verriegelbaren Teilen besteht, die gemeinsam einen sich verjüngenden Abschnitt im Einfüllstutzen bilden, dessen Abmessung zur Füllöffnung hin dem Füllrohr mit großen Durchmesser und zum Inneren des Behälters dem Füllrohr mit kleinem Durchmesser entspricht und der Abschnitt in einer querliegenden Sperre für die Einschubtiefe des Füllrohres mit kleinem Durchmesser endet, wobei die Teile an der flexiblen Halterung schwenkbar befestigt sind.

Damit wird es ermöglicht, daß ein Füllrohr großen Durchmessers, wie eine Dieselzapfpistole in den sich verjüngenden Abschnitt eingeschoben wird und Teile der Sicherungseinrichtung an der flexiblen Halterung schwenkend geöffnet werden, so daß der sich verjüngende Abschnitt letztlich an die Zapfpistole anlegen kann. Mit dem Verschwenken der Teile verschwenkt zugleich die querliegende Sperre, so daß das Füllrohr mit großem Durchmesser ungehindert vollständig eingeschoben werden kann.

Sobald ein Füllrohr kleinen Durchmessers, z.B. eine Zapfpistole für bleifreies Benzin eingeschoben wird, werden dagegen die den verjüngenden Abschnitt bildenden Teile nicht schwenkend nach außen verschoben und die querliegende Sperre verhindert, daß das Füllrohr kleinen Durchmessers weiter eingeschoben wird.

Die Halterung ist ringförmig ausgebildet und an ihr sind zwei oder mehr Teile angeordnet, die Schenkel haben, welche sich fliegend zum Inneren des Behälters erstrecken und an ihrem Ende Vorsprünge aufweisen, die sich zur Mittelachse des Einfüllstutzens erstrecken. Diese Ausformung des verjüngten Abschnittes in Kombination mit der Halterung und der querliegenden Sperre in Form von Vorsprüngen ist eine von mehreren Ausführungsformen einer solchen erfindungsgemäßen Vorrichtung.

Vorzugsweise sind die Teile der Sicherungseinrichtung elastisch und bilden im entlasteten Zustand den sich verjüngenden Abschnitt. Andererseits ist es jedoch auch konstruktiv möglich die Teile nicht elastisch oder im wesentlichen unelastisch auszubilden und durch ein federndes Element miteinander zu koppeln, so daß unter Vorspannung diese Teile den sich verjüngenden Abschnitt bilden, der von einem Füllrohr großen Durchmessers gegen die entsprechende Federspannung geöffnet werden kann. In einer Ausführungsvariante kann das federnde Element als Schraubenfeder oder als elastischer Ring aus Gummi oder Metall ausgebildet, z.B. kann der Ring auch nach Art einer Schraubenfeder aus Metall oder aus elastischem Kunststoff bestehen oder es wird beispielsweise ein Federstahl oder entsprechender Draht verwendet.

In einer Alternative sind die Halterung selbst und die Teile einstückig ausgebildet und als solches in den Stutzen eingesetzt, wobei vorzugsweise als Materialien Kunststoffe oder federnde Metalle verwendet werden. Der verjüngende Abschnitt besteht dabei praktisch aus federnden Verlängerungen der Halterung, die von dem Füllrohr größeren Durchmessers aufgebogen werden, während ein Füllrohr kleinen Durchmessers diese Teile nicht aufbiegen kann, da diese Halterung an ihrem verjüngten Ende dem Durchmesser des kleinen Füllrohres entspricht und damit nicht weiter eingeschoben kann als die querliegende Sperre oder entsprechende Vorsprünge an den Schenkeln zulassen.

In einer Ausführungsform kann die Halterung auch als separates Teil, z.B. als ringförmige Torsionsfeder ausgebildet sein, die zugleich am Umfang des Einfüllstutzens oder an dessen Wandung festgelegt ist.

In Variation der generellen Lösung wird erfindungsgemäß vorgeschlagen, daß bei der gattungsgemäßen Vorrichtung die Sicherungseinrichtung als in den Einfüllstutzen ragender Federstahlschenkel ausgebildet ist, der an der oder außerhalb der Wandung des Einfüllstutzens befestigt ist, mit einem ersten Bogen den Querschnitt im Einfüllstutzen auf den kleinen Durchmesser verjüngt mit einem zweiten Bogen an demselben oder einem anderen Schenkel als querliegende Sperre für die Einschubtiefe des Füllrohrs ausgebildet ist, wobei die Sperre zusätzlich mit einer kreisringförmigen Platte versehen sein kann.

Hier kann der Federstahl den Einfüllstutzen in seinem Querschnitt soweit verringern, daß neben dem ersten Bogen des Federstahles nur ein Füllrohr kleinen Durchmessers vorbei geschoben werden kann, welches dann aber auf die querliegende Sperre tritt und / oder das Einfüllen von nicht erwünschtem Kraftstoff oder ungewollter Kraftstoffmenge mit Hilfe des zweiten Bogens und/oder der kreisringförmigen Platte verhindert. Sobald ein Füllrohr großen Durchmessers eingeführt wird, wird der erste Bogen des Federstahls durch das größere Füllrohr elastisch gebogen oder verschoben, wodurch sich zugleich die querliegende Sperre, die durch den zweiten Bogen des Federstahlschenkels gebildet wird, öffnet.

Ergänzend wird vorgeschlagen einen rohrförmigen Einsatz zu verwenden für den Fall, daß in den Dieselbehälter im Winterbetrieb doch beispielsweise Benzin oder andere Zusätze zugefügt werden sollen. Der Einsatz ist in eine der zuvor beschriebenen Vorrichtungen einsetzbar und entsprechend verwendbar, wenn er eine Wandung hat, deren Dicke der Dicken-Differenz zwischen dem großen und kleinen Durchmesser der beschriebenen Füllrohre aufweist, um dann durch den Innendurchmesser des Einsatzes hindurch das Befüllen des Dieselbehälters mit einer Benzinzapfpistole zu gestatten.
Letztlich kann der Einsatz auch so gestaltet sein, daß er zuvor auf die Benzinzapfpistole aufgesetzt oder dort angeordnet wird und somit dann ein Füllrohr großen Durchmessers simuliert.

Additiv oder alternativ kann die Sperreinrichtung mit dem Füllrohr kleinen Durchmessers auch durch eine z.B. mechanische Einrichtung vorgebbare Rechts-Links-Bewegung bzw. schraubenförmige Bewegung entriegelt werden.

Anhand einer schematischen Zeichnung soll die Erfindung näher erläutert werden; dabei werden auch andere Zwecke und die Vorteile der Erfindung offenbar. Es zeigen:
- Fig. 1a, b: Einfüllstutzen nach dem Stand der Technik in Gebrauchssituation bei Benutzung eines kleinen Füllrohres und eines großen Füllrohres;
- Fig. 2: eine erste Ausführungsform der Vorrichtung, nach dem Stand der Technik ;
- Fig. 3a, b: eine zweite Ausführungsform der Vorrichtung nach dem Stand der Technik;
- Fig. 4 a, b: eine dritte Ausführungsform der Vorrichtung nach dem Stand der Technik ;
- Fig. 5 a, b, c: eine vierte Ausführungsform der Vorrichtung nach dem Stand der Technik ;
- Fig. 6 a, b, c: eine Ausführungsform gemäß den Figuren 5 a, b, c mit einer Rückstauplatte;
- Fig. 7 a - d: eine weitere Ausführungsform gemäß Fig. 5 a, b, c mit einer zweiten Form der Rückstauplatte;
- Fig. 8 a - c: eine weitere Ausführungsform in Varianten mit unterstützter Platte;
- Fig. 9.a, b: eine weitere Ausführungsform, teils vergrößert dargestellt;
- Fig. 10: eine weitere Ausführungsform nach dem Stand der Technik; und
- Fig. 11: einen Einsatz zur Verwendung mit der erfindungsgemäßen Vorrichtung.

In den folgenden Figuren werden identische Bezugszeichen für identische oder äquivalent wirkende Bauteile benutzt.

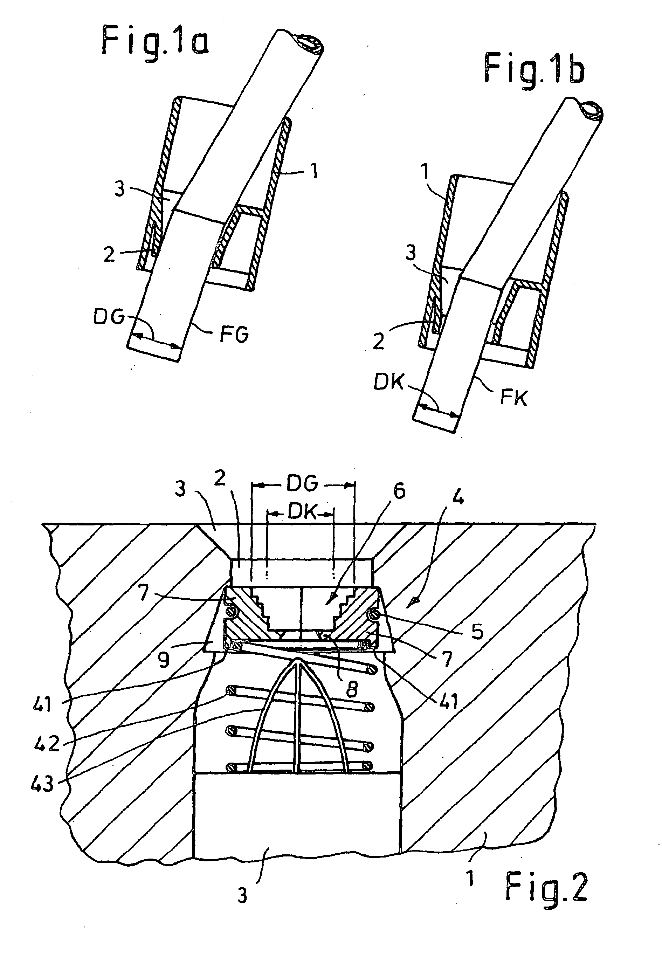

Figuren 1 a und 1 b zeigen für einen Behälter 1, z.B. einen Kraftstofftank eines Fahrzeuges, einen Einfüllstutzen 3 mit einer Querschnittsverjüngung 2, welche eine Öffnung aufweist, durch die ein Füllrohr FG mit großem Durchmesser DG bzw. ein Füllrohr FK kleinen Durchmessers DK hindurch reicht, um den Behälter 1 zu füllen. Das Füllrohr FG gehört beispielsweise zu einer Zapfpistole für Dieseltreibstoff und das Füllrohr FK zu einer Zapfpistole für bleifreien Kraftstoff. Der Durchmesser DG entspricht für den Behälter 1 mit der Öffnung an der Querschnittsverjüngung 2, dem bestimmungsgemäß zu verwenden Füllrohr FG für Dieselkraftstoff. Figur 1b zeigt, daß nach dem Stand der Technik der Behälter 1 auch mit einem Füllrohr FK befüllt werden kann, wobei ein Befüllen dieses Behälters 1 mit bleifreiem Kraftstoff, z.B. mit der Zapfpistole mit Füllrohr FK zu erheblichen Schäden führen kann.

Figur 2 zeigt daher eine erste Variante nach dem Stand der Technik, bei der für den Behälter 1 mit dem Einfüllstutzen 3 in einer Querschnittsverjüngung 2 eine Sicherungseinrichtung 4 eingesetzt ist, die ein Füllen des Behälters 1 mit einer Fülleinrichtung FK ausschließen soll. Die Sicherungseinrichtung 4 verfügt über eine Halterung 5, mit der sie - in nicht dargestellter Weise - an der Innenwandung des Einfüllstutzens 3 befestigt ist. Die Sicherungseinrichtung 4 enthält mindestens zwei, vorzugsweise drei oder mehr, Schenkel 7, die L-förmig ausgebildet sind und gemeinsam einen verjüngenden Abschnitt 6 im Einfüllstutzen 3 umschließen. Dieser verjüngende Abschnitt hat zur Füllseite, d.h. nach außen, zunächst einen Durchmesser DG entsprechend dem bestimmungsgemäß einzuführenden Füllrohr FG und verjüngt sich in Richtung des Behälterinneren auf einen Durchmesser DK entsprechend dem Füllrohr FK mit dem kleinen Durchmesser DK. Die Schenkel haben zur Seite des Behälterinneren, wo sie etwa einen Durchmesser DK bilden, eine Sperreinrichtung, hier als Schenkelverlängerung 8 der Schenkel 7 dargestellt, die sich in Richtung auf die Mitte des Einfüllstutzens erstreckt. In der gezeigten Lage werden die Schenkel 7 gehalten durch eine Schraubenfeder 42, deren Lage durch einen Drahtkäfig 43 und einen Bund 41 an den Schenkeln 7 bestimmt wird. Sobald eine Zapfpistole mit Füllrohr FG mit entsprechendem Durchmesser DG eingeführt wird, schwenken die Schenkel 7 um die Halterung 5 bei Überwindung der Federkraft der Schraubenfeder 42 so in den Schwenkraum 9, daß ein Durchlaß entsprechend dem Durchmesser DG in dem Einfüllstutzen 3 frei wird und analog Figur 1 a das Füllrohr FG in den Einfüllstutzen 3 zum Befüllen des Behälters 1 eingeführt werden kann.

Wird nun versucht, mit einer Zapfpistole mit Füllrohr FK in den Einfüllstutzen 3 einzudringen, so stößt das Füllrohr FK mit dem Durchmesser DK auf die Schenkelfortsetzungen 8, die hier eine Sperre bilden, und das Füllrohr FK kann nicht weit in den Einfüllstutzen 3 eingebracht werden. Zumindest ist der Federdruck so groß, daß nur mit erheblichem Widerstand die Sicherungseinrichtung geöffnet werden könnte.

Wichtig ist, daß mit dem Füllrohr FG, beginnend am Durchmesser DG der Sicherungseinrichtung, schon die Schwenkbewegung der Schenkel 7 um die Halterung 5 eingeleitet wird, während dies bei dem Füllrohr FK unmöglich ist.

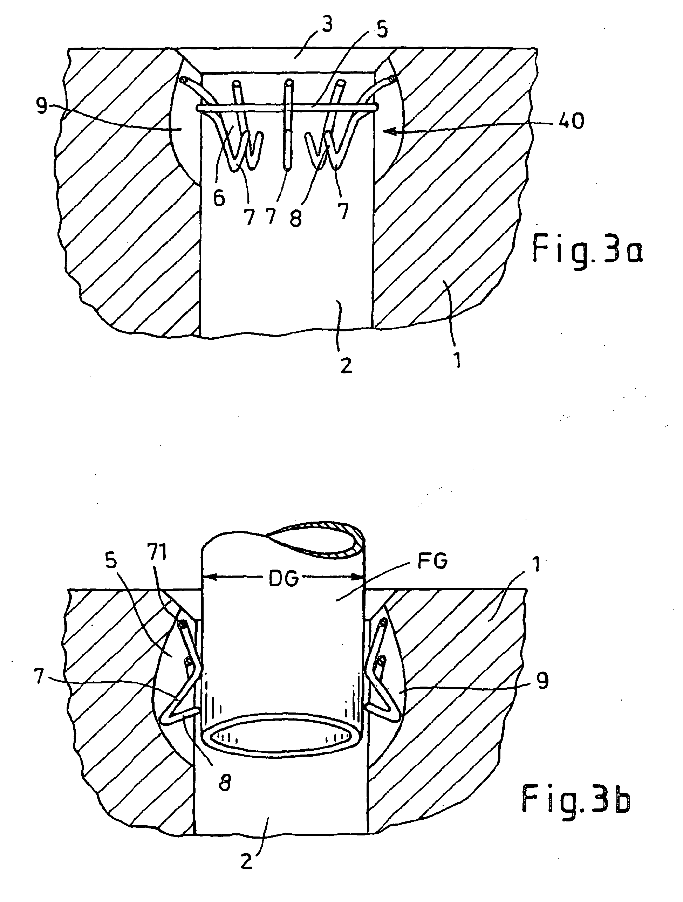

Figur 3 a zeigt eine Vorrichtung mit derselben Wirkung, wie bei Figur 2. Der Behälter 1 weist einen Einfüllstutzen 3 und eine Querschnittsverjüngung 2 auf. Am Einfüllstutzen 3 ist eine Sicherungseinrichtung 40 angebracht, welche aus einem elastischen Haltering 5 und Schenkeln 7 besteht, die an dem elastischen Haltering schwenkbar angekoppelt sind. Die Befestigung des Halteringes 7 an dem Einfüllstutzen bzw. in der Querschnittsverjüngung 2 ist nicht dargestellt.

Auch hier haben die Schenkel 7 eine als Sperre wirkende L-förmige Verlängerung 8, die ein Durchgreifen eines Füllrohres FK mit kleinem Durchmesser DK nicht zulassen. Die Schenkel 7 bilden wiederum im Einfüllstutzen bzw. dessen Querschnittsverjüngung einen verjüngenden Abschnitt 6, wie dies aus Figur 3 a deutlich wird.

Figur 3 b zeigt nun die Interaktion einer Sicherungseinrichtung 40 mit einem Füllrohr FG mit großem Durchmesser DG. Sobald das Füllrohr FG den Bereich des Halteringes 5 erreicht, kippen die Schenkel 7 mit den Schenkelverlängerungen 8 nach außen, maximal bis die Führungsteile 71 der Schenkel 7 nach Schwenken um den Haltering 5 am Füllrohr FG anliegen. Während des Einführens des Füllrohres FG spreizt sich der Haltering 5, z.B. bestehend aus einer Drahtfeder, und die Schenkel 7, in diesem Fall auch der als Feder ausgebildete Haltering 5, werden in den Schwenkraum 9 des Behälters 1 verdrängt, so daß das Füllrohr FG Einlaß zu dem Behälter findet.

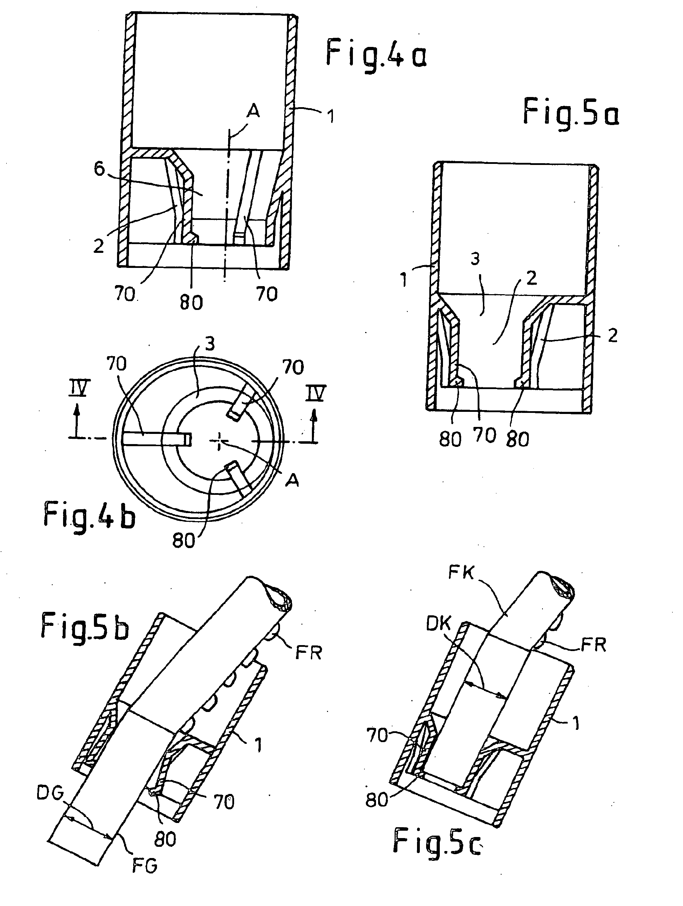

Figuren 4 a, 4 b zeigen einen zum Stand der Technik gemäß Figuren 1 a, b im wesentlichen identischen Aufbau, jedoch ist der Bereich der Querschnittsverjüngung 2 im Einfüllstutzen 3 mit einer Sicherungseinrichtung versehen, welche hier aus den Schenkeln 70 und der Sperre 80 für Füllrohre FK besteht. Die Schenkel 70 bzw. die Sperre 80, sind hier aus dem selben Material gefertigt, wie der Einfüllstutzen bzw. das Behälterteil 1 selbst, z.B. einem Kunststoffteil, jedoch bilden die Schenkel 70 mit der Sperre 80 ein integrales Teil mit dem Einfüllstutzen bzw. dessen Querschnittsverjüngung 2. Der verjüngende Abschnitt ist im Schnitt gemäß Figur 4 a, welche eine Schnittlage IV - IV in Figur 4 b darstellt, deutlich zu erkennen. In der Draufsicht auf die Situation am Einfüllstutzen gemäß Figur 4 b, dessen Mittelachse A eingezeichnet ist, läßt sich deutlich erkennen, daß die Schenkel 70 in Richtung auf die Mittelachse A des Einfüllstutzens vorspringen und in den Sperren 80 enden.

Die Figuren 5 a, b, c zeigen eine den Figuren 4 a, 4 b, ähnliche Situation, jedoch sind hier vier Schenkel 70 mit vier Sperren 80 dargestellt, im Gegensatz zu den drei Schenkeln 70 mit entsprechender Zahl von Sperren 80 gemäß den Figuren 4 a, 4 b. In der Figur 5 b ist zu erkennen, wie ein Füllrohr FG mit Durchmesser DG in die Vorrichtung gemäß der Erfindung mit der Sicherungseinrichtung problemlos eingeführt werden kann. Dabei werden die Schenkel 70 im Einfüllstutzen, genauer im Bereich der Querschnittsverjüngung bzw. dem verjüngenden Abschnitt 6 so gespreizt, daß auch die Sperren 80 zugleich mit den Schenkeln 70 weg schwenken und das Füllrohr FG durchlassen. In diesem Falle kann die Zapfpistole mit Füllrohr FG mit Hilfe von Füllrohrrasten FR, wie vom Autofahrer gewohnt, am Rande des Einfüllstutzens bzw. Behälters 1 eingerastet werden und die Automatikfunktion der Zapfpistole eingestellt werden. Damit ist dann ohne Eingriff des Benutzers ein weiteres Füllen des Behälters, welches in der Regel minutenlang dauert, möglich. Für den Fall, daß eine solche Einrastung nicht geschieht, wird der Autofahrer zusätzlich aufmerksam, daß irgend etwas beim Tankvorgang nicht dem normalen Ablauf entspricht. Eine solche Situation wird der Benutzer vorfinden, wenn gemäß Figur 5 c ein kleines Füllrohr FK mit dem Durchmesser DK in einen Behälter 1 mit der erfindungsgemäßen Vorrichtung, hier dargestellt durch die Schenkel 70 des verjüngenden Abschnittes, sowie die Sperren 80, vorfindet. In diesem Fall können die Füllrohrrasten FR nicht am Rand des Behälters einrasten und der Benutzer wird aufmerksam, daß hier eine Situation gegeben ist, die es ihm unmöglich macht, das Füllrohr FK weiter in den Behälter 1 einzuschieben, weil es an den Sperren 80 blockiert wird.

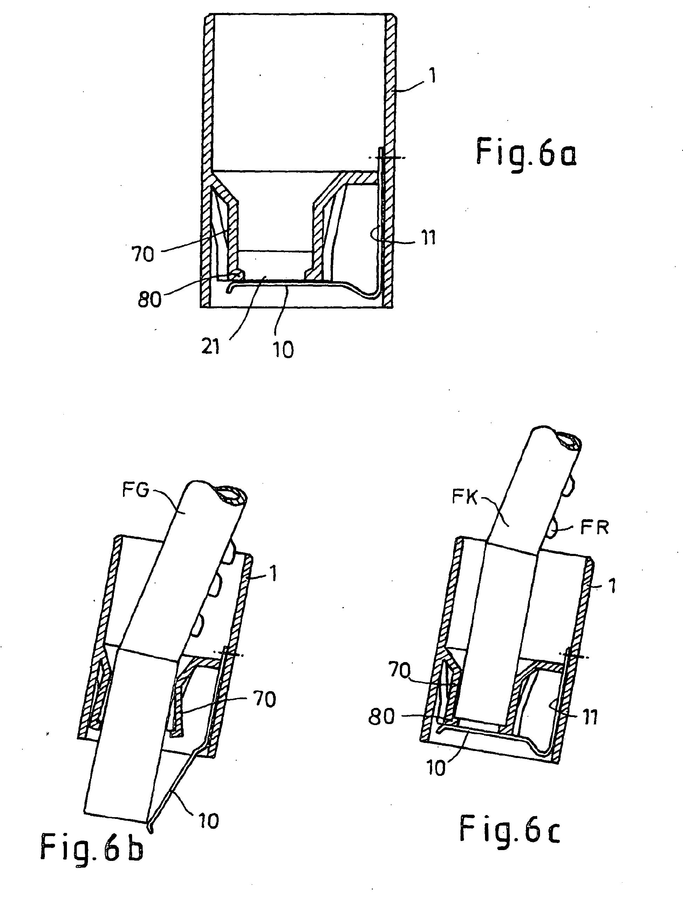

Gemäß der Erfindung kann eine Ausführungsform nach dem Stand der Technik gemäß der Figuren 5 a - c mit einer, die Einfüllung von Kraftstoff behindernden Platte 10 versehen werden, was in den Figuren 6 a, b, c dargestellt ist. Ein solche Platte, z.B. aus einem federnden Metall, ist schematisch als Platte 10 dargestellt, die mittels einer Plattenhalterung 11 in nichtdargestellter Weise am Behälter 1 bzw. im Einfüllstutzen befestigt und verschließt unterhalb der Schenkel 70 bzw. der Sperren 80 die Öffnung 21 zum Behälter. Diese Platte 10 aus Federstahl oder einem stabilen, federnden Kunststoff kann gemäß Figur 6 b durch ein Füllrohr FG bestimmungsgemäß aufgedrückt werden, nachdem die Schenkel 70, wie zuvor bereits in Figur 5 b dargestellt, auf geschwenkt bzw. aufgebogen wurden. Figur 6 c zeigt wiederum, daß mit einem Füllrohr FK dies nicht möglich ist, da die Schenkel 70 sich nicht aufbiegen und das Füllrohr FK in der Einschubtiefe durch die Sperre 80 begrenzt wird und so gar nicht die Platte 10 erreicht. Die Platte 10 hat die Zusatzfunktion im Falle, daß die Zapfpistole mit Füllrohr FK in Funktion gesetzt wird, der Kraftstoff auf die Platte 10 prallt und durch den Rückstau die Automatikfunktion der Zapfpistole außer Betrieb setzt und kein weiterer Kraftstoff in Behälter 1 eingefüllt werden kann.

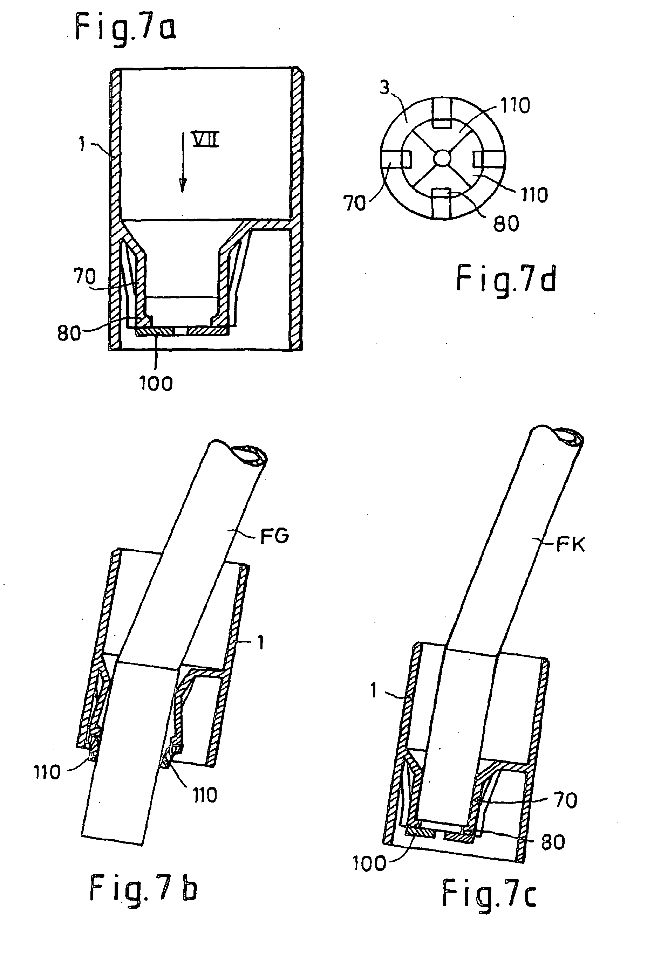

Eine Alternative zu der Platte 10 ist dargestellt in den Figuren 7 a, 7 b, 7 c, 7 d. Figur 7 a zeigt wiederum eine Situation gemäß Figur 5 a, wobei jedoch zum Behälterinneren unterhalb der Sperren 80 eine einstückige Platte aus Kunststoff oder Gummi, Bezugszeichen 100, angeordnet wird. Pfeil VII weist zu einer Ansicht gemäß Figur 7 d mit einer alternativen Ausführungsform der Platte 100. Hier besteht die Platte aus vier Segmenten 110, die jeweils unter die Sperren 80 der Schenkel 70 angeklebt sind und im wesentlichen, bis auf einen kleinen Durchlaß in der Mitte, welche zugleich eine Entlüftung des Behälters ermöglicht, einen Verschluß des Einfüllstutzens. In einer derartigen Bauform ist auch hier eine erfindungsgemäße Sperre in einer Art und Weise möglich, wie dies bereits zu den Figuren 5 und 6 beschrieben wurde. Figur 7 b zeigt, wie Segmente 110 sich elastisch öffnen, wenn Füllrohr FG mit dem richtigen Durchmesser benutzt wird, um den Behälter 1 zu füllen. Wie bereits zur Figur 6 c dargestellt, wird auch gemäß Figur 7 c ein kleines Füllrohr FK durch die Schenkel 70 bzw. Sperren 80 behindert, weiter in den Behälter einzudringen. Die Platte 100 verhindert in zuvor bereits geschilderter Weise, daß in dieser Position Kraftstoff in den Behälter eingefüllt wird.

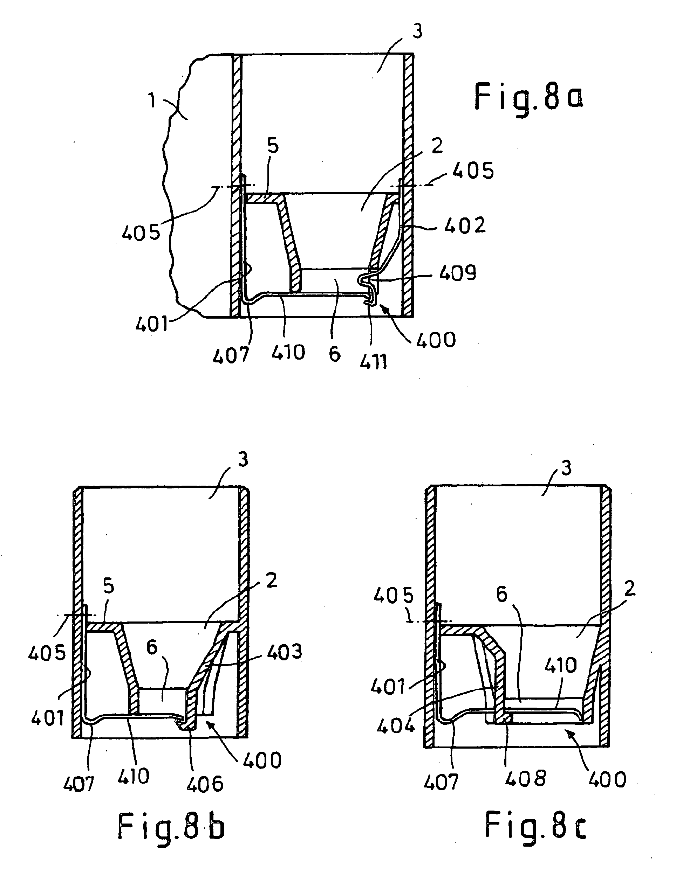

Gemäß einer anderen Lösung der Erfindung können auch Ausführungsformen gemäß Fig. 8 a -c Verwendung finden. Ein Behälter 1 mit Einfüllstutzen 3, der eine Querschnittsverjüngung 2 aufweist, erhält eine Sicherungseinrichtung 400 aus zwei Komponenten. Eine Stahlfeder ist mit einer Halterung z.B. einer Schraube 405 am Behälter bzw. Einfüllstutzen 3 befestigt ist. In einem Fall (Fig. 8a) besteht die Sicherungseinrichtung 400 noch aus einem weiteren Federstahl als Schenkel 402, der ebenfalls mit einer Halterung 405 am Einfüllstutzen befestigt ist und einen Bogen 409 hat, welcher so innerhalb der Querschnittsverjüngung 2 des Einfüllstutzens noch einen verjüngenden Abschnitt 6 bildet. Der Federstahlbügel kann von einem - nicht dargestellten - Füllrohr FG im Bereich des Bogens 409 elastisch aufgebogen werden. Der Schenkel oder Federstahlbügel 402 weist am Ende vorzugsweise einen Vorsprung 411 auf, der der Unterstüzung der Platte 410 dient. Er wird zugleich mit dem Bogen 409 durch das Füllrohr aus seiner Lage gedrückt, so daß auch der zweite Bogen 407 / 410 den Weg durch den verjüngten Abschnitt 6 frei machen kann. Beim Einführen eines bestimmungsgemäßen Füllrohres FG wird der Federstahlbügel 410 weggedrückt, um so den Einfüllstutzen bzw. den Zugäng zum Behälterinneren für das Füllrohr frei zu machen.
Der Boden 410 des Federstahlelementes kann auch plattenförmig ausgebildet sein, wie dies anhand der Figuren 6 a und 7 a mit anderen Platten dargestellt wurde.
In einer Variante gemäß Fig. 8b ist der Federstahlbügel durch einen Kunststoff-Schenkel 403 mit Vorsprung 406 ersetzt, der an der Halterung 5 wie zuvor beschrieben elastisch federnd und fliegend schwenkbar gelagert ist bzw ein an der Halterung integral angespritztes Teil bildet.
In ähnlicher Weise zeigt Fig. 8c eine Variante, bei der ein Schenkel 404 aus Kunststoff einen Vorsprung 408 hat, der die Platte 410 unterstützt.
Anstelle eines einzelnen dargestellten Federstahlbügels 402 bzw. der elastischen Schenkel 403 und 404 kann auch eine Mehrzahl derartiger Bügel benutzt werden.

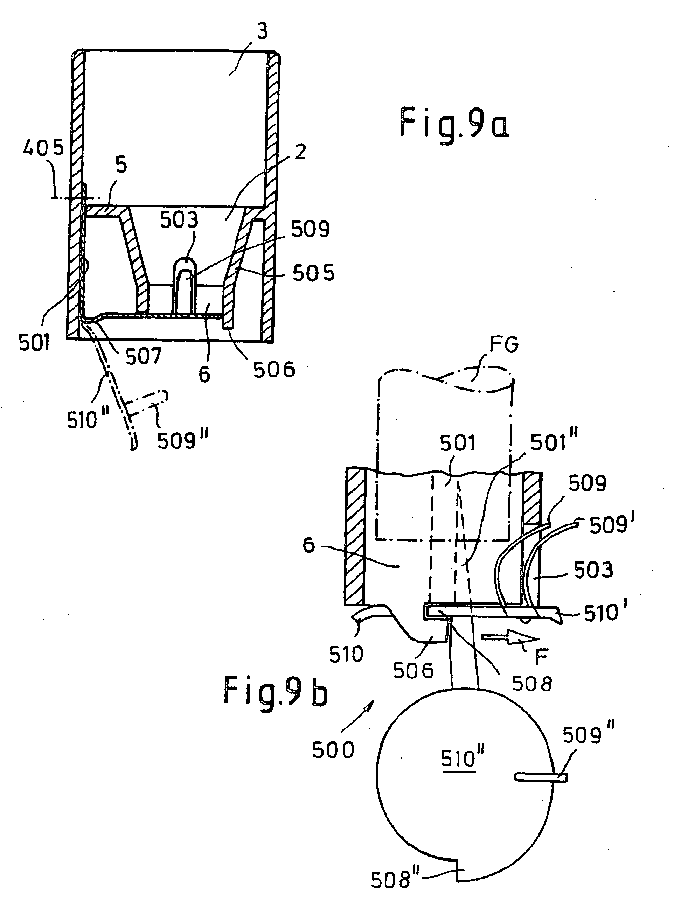

Fig. 9a zeigt teils im Schnitt eine weitere Ausführungsform 500 der Vorrichtung, von der der verjüngte Abschnitt 6 in Fig. 9b vergrößert und um 90° geschwenkt dargestellt ist. Die Bezugszeichen einiger Teile haben teils ein oder zwei Hochkommazusätze; diese bezeichnen verschiedene Stellungen der Teile bei Einführung eines Füllrohres FG in den Stutzen.

Der Einfüllstutzen 3 hat eine trichterförmige Querschnittsverjüngung 2, die durch die Halterung 5 mit dem oder den Schenkeln 505 gebildet wird. Ein weiteres Teil oder flexibler federnd beweglicher Schenkel 501 ist an dem Stutzen befestigt, dessen Bogen 507 in einer als Sperre ausgebildeten Platte 510 endet. Auf die Platte aufgesetzt oder daran angeformt ist ein bogenförmiges Element 509, das in einer Ausnehmung 503 am Schenkel 505 Platz findet. Der Schenkel 505 weist einen Vorsprung 506 auf zur Unterstützung der Platte 510 an dessen Nase 508 in Ruheposition gemäß Fig. 9a. Die Offenposition des Einfüllstutzens bei eingestecktem Füllrohr zeigt Platte 510" mit Element 509".

In Fig. 9b wird die Funktion der Vorrichtung deutlich. Wenn das gestrichelt dargestellte Füllrohr FG großen Durchmessers eingeführt wird, erreicht es im Abschnitt 6 das das den Durchgang sperrende Element 509. Bei weiterem Einführen drückt das Füllrohr FG das Element in die Position 509', es weicht durch die resultierende Kraft F (Pfeil) in die Ausnehmung 503 aus und nimmt dabei die Platte zur Position 510' mit und verbiegt zugleich den Schenkel 501 in dieselbe Richtung. Dabei wird die Platte 510' bzw. deren Nase 508 von der Unterstützung 506 gezogen. Bei weiterem Durchstecken des Füllrohres FG wird die Platte aufgestoßen und gelangt in die Endpostion 510"; hier hat der Schenkel 501" seine größte Auslenkung und maximale Rückstellkraft, Wenn das Füllrohr FG zurückgezogen wird, schwenkt die Platte 510" in ihre Schließposition 510 zurück und sperrt den Durchgang für kleine Füllrohre FK.

Im übrigen kann der integral am Federstahlbügel 11, 401, 501 angeformte Bogen 407, 507 auch als Drehgelenk mit einer rückstellenden Feder ausgestaltet sein.

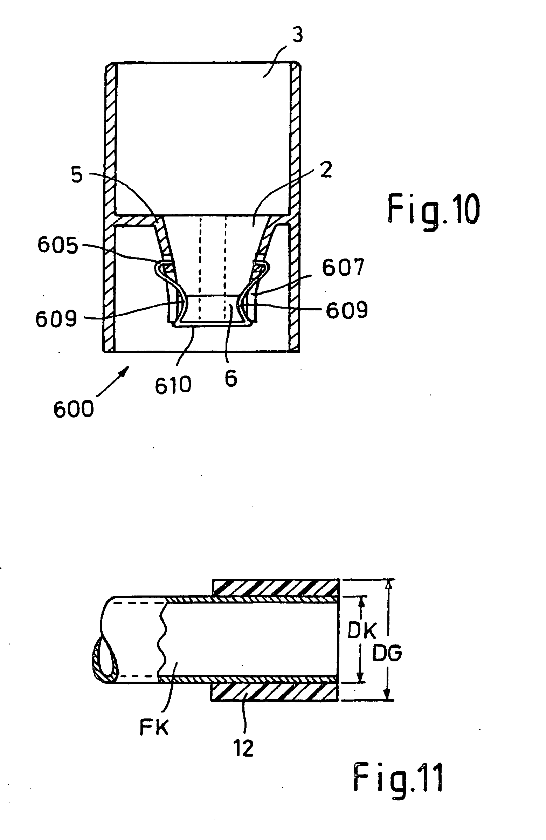

Fig. 10 zeigt eine weitere Ausführungsform nach dem Stand der Technik. In der Querschnittsverjüngung 2 des Einfüllstutzens 3 sind ein oder mehrere federnde Bügel 600 mit ersten Bögen 609 zur Bildung des verjüngten Abschnitts 6 und integral angeformten zweiten Bögen 610 angeordnet. Die Bögen haben dieselbe Funktion wie bereits zuvor beschrieben. Die Bügel 600 sind mit Haken in Bohrungen 605 fixiert. Die Ausnehmungen 607 der Querschnittsverjüngung 2 bieten Platz für die Verformung der ersten Bögen 609 bei Einführen des Füllrohres FG, wobei die Bögen 609 eine geschwungene Raumform haben, so daß die zweiten Bögen 610 seitlich ausweichen können und so den Durchgang freimachen für Füllrohre FG.

In manchen Fällen, insbesondere im Winterbetrieb möchten Kraftfahrer Dieselkraftstoff bessere Fließeigenschaften geben, indem sie dem Diesel im Behälter 1 zusätzlich und bewußt Benzin zugeben. In diesem Falle könnte bei einem, mit der Erfindung ausgerüsteten, Einfüllstutzen kein Befüllen des Behälters 1 erfolgen, weil wie dargestellt, ein Füllrohr kleineren Durchmessers mit dem Benzin eingefüllt wird, nicht in den Einfüllstutzen gelangen kann. Für diesen Zweck wird gemäß Figur 11 vorgeschlagen, einen Einsatz 12, ein Toroid mit einem Außendurchmesser DG und einem Innendurchmesser DK zu verwenden, der entweder in die erfindungsgemäße Vorrichtung eingefügt wird und so dann eine Zapfpistole mit Füllrohr FK durch das Innere des Ringes 12 eingeführt werden kann, oder ein derartiger Einsatz 12 wird verwendet, um auf das Füllrohr FK aufgesetzt zu werden, um so praktisch ein Füllrohr FG zu erhalten, das wie bei der Erfindung vorgesehen Verwendung finden kann.

## Patentansprüche

1. In einen Einfüllstutzen eines Behälter für Füllrohre mit großen Durchmesser einsetzbare Vorrichtung als Sperre für das Befüllen des Behälters durch ein Füllrohr kleinen Durchmessers mittels von der Seite her in den Einfüllstutzen ragender, dessen Querschnittavorjüngung auf einen vorbestimmbaren Durchmesser bewirkender, verschiebbarer Sicherungseinrichtung, wobei die Sicherungseinrichtung (4, 40, 400, 500, 600) aus mehreren an der Innenwand des Einfüllstutzens (3) befestigten flexiblen Tellen (7, 70, 401-404,501, 609) besteht, die gemeinsam einen sich verjüngenden Abschnitt (6) im Einfüllstutzen (3) bilden, dessen Abmessung zur Füllöffnung hin dem großen Durchmesser (DG) und zum Inneren des Behälters (1) hin dem kleinen Durchmesser (DK) eines Füllrohres (FG, FK) entspricht und der Abschnitt (6) In einer querliegenden Sperre (8, 80, 410, 510, 610) für die Einschubtiefe des Füllrohres (FK) kleinen Durchmessers (DK) endet, wobei die Teile an einer Halterung (5) flexibel schwenkbar beffestigt sind, die Halterung (5) ringförmig ausgebildet ist und an ihr zwei oder mehr Teile (7, 70, 401 - 404, 501, 609) angeordnet sind,
die Schenkel haben, welche sich fliegend zum Inneren des Behälters (1) erstrecken und an Ihrem Ende Vorsprünge (8, 80, 406 - 408, 410, 510, 610) aufweiten, die sich zur Mittelachse (A) des Einfüllstutzens erstrecken, und wobei an der Sperre oder den Vorsprüngen eine oder mehrere, im entlasteten Zustand der Teile im wesentlichen geschlossene und etwa kreisringförmige, elastische Planen (10, 100, 110, 410, 510, 610) angebracht sind,
**dadurch gekennzeichnet, daß**
die Teile (7, 70) durch ein federndes Element (5,42) miteinander gekoppelt sind und unter Vorspannung den sich verjüngenden Abschnitt (6) bilden.

2. Vorrichtung nach Anspruch 1, **dadurch gekennzeichnet, daß** die Teile elastisch sind und im entlasteten Zustand den sich verjüngenden Abschnitt (6) bilden.

3. Vorrichtung nach einem der vorherigen Ansprüche, **dadurch gekennzeichnet, daß** das federnde Element eine Schraubenfeder (40) oder ein Ring (41) oder ein Draht ist.

4. Vorrichtung nach einem der vorhergehenden Ansprüche, **dadurch gekennzeichnet, daß** die Halterung(5) und die Teile einstückig aus Kunststoff oder Metall ausgebildet sind.

5. Vorrichtung nach Anspruch 1, **dadurch gekennzeichnet, daß** die Halterung (5) als ringförmige Torsionsfeder ausgebildet ist.

6. Vorrichtung nach einem der vorhergehenden Ansprüche, **dadurch gekennzeichnet, daß** die Sicherungseinrichtungen (400, 500, 600) als in den Einfüllstutzen (3) ragende federnde Schenkel (11, 401 - 404, 501, 609) aus Metall oder Kunststoff ausgebildet sind, von denen mindestens einer an oder außerhalb der Wandung des Einfüllstutzens (3) befestigt ist, mit einem ersten Bogen (403, 404, 409, 509, 609) den Querschnitt im Einfüllstutzen auf den kleinen Durchmesser (DG) verjüngt, und mit einem zweiten Bogen (410, 510, 610) als querliegende Sperre für die Einschubtiefe des Füllrohres (FK) kleinen Durchmessers ausgebildet ist.

7. Vorrichtung nach einem der vorhergehenden Ansprüche, **dadurch gekennzeichnet, daß** der erste und der zweite Bogen verschiedenen Teilen zugeordnet sind.

8. Vorrichtung nach einem der vorhergehenden Ansprüche, **dadurch gekennzeichnet, daß** der zweite Bogen (410, 510) als etwa kreisringförmige Platte ausgebildet ist.

9. Vorrichtung nach einem der vorhergehenden Ansprüche, **dadurch gekennzeichnet, daß** der zweite Bogen im entlasteten Zustand der Teile von einem Vorsprung (406, 408, 411, 506) an einem Teil mit dem ersten Bogen unterstützt ist.

10. Vorrichtung nach einem der vorhergehenden Ansprüche mit einem rohrförmigen Einsatz (12), der eine Wandung entsprechend der Dickendifferenz zwischen dem großen (DG) und dem kleinen (DK) Durchmesser von Füllrohren (FG, FK) aufweist, um das Befüllen eines Dieselbehälters mit einer Benzin-Zapfpistole durch den Einsatz (12) hindurch zu gestatten.

11. Vorrichtung nach Anspruch 10, **dadurch gekennzeichnet, daß** der Einsatz (12) auf der Benzinzapfpistole anbringbar ist.

## Claims

1. Device which can be inserted into a filler neck of a tank for filling pipes with a large diameter, as a lock to prevent filling of the tank by a filling pipe of small diameter by means of a displaceable safety device which protrudes into the filler neck from the side and brings about a cross-sectional tapering of said filler neck to a predeterminable diameter, wherein the safety device (4, 40, 400, 500, 600) comprises a plurality of flexible parts (7, 70, 401-404, 501, 609) which are fastened to the inner wall of the filler neck (3) and together form a tapering section (6) in the filler neck (3), the size of which section corresponds, towards the filling opening, to the large diameter (DG) and, towards the interior of the tank (1), to the small diameter (DK) of a filling pipe (FG, FK), and the section (6) ends in a transversely situated lock (8, 80, 410, 510, 610) for the insertion depth of the filling pipe (FK) of small diameter (DK), wherein the parts are fastened flexibly in a pivotable manner to a holder (5), the holder (5) is of annular design and two or more parts (7, 70, 401-404, 501, 609) are arranged on it, which parts have limbs which extend in a floating manner to the interior of the tank (1) and, at their end, have projections (8, 80, 406-408, 410, 510, 610) which extend to the centre axis (A) of the filler neck, and wherein one or more elastic plates (10, 100, 110, 410, 510, 610) which are essentially closed in the unloaded state of the parts and are approximately in the shape of a circular ring are fitted to the lock or to the projections, **characterized in that** the parts (7, 70) are coupled to one another by a resilient element (5, 42) and, under prestress, form the tapering section (6).

2. Device according to Claim 1, **characterized in that** the parts are elastic and, in the unloaded state, form the tapering section (6).

3. Device according to either of the preceding claims, **characterized in that** the resilient element is a helical spring (40) or a ring (41) or a wire.

4. Device according to one of the preceding claims, **characterized in that** the holder (5) and the parts are formed integrally from plastic or metal.

5. Device according to Claim 1, **characterized in that** the holder (5) is designed as an annular torsion spring.

6. Device according to one of the preceding claims, **characterized in that** the safety devices (400, 500, 600) are designed as resilient limbs (11, 401-404, 501, 609) which are made from metal or plastic, protrude into the filler neck (3) and of which at least one is fastened to or outside the wall of the filler neck (3), and, with a first curve (403, 404, 409, 509, 609), tapers the cross section in the filler neck to the small diameter (DK), and, with a second curve (410, 510, 610), is designed as the transversely situated lock for the insertion depth of the filling pipe (FK) of small diameter.

7. Device according to one of the preceding claims, **characterized in that** the first and second curves are assigned to different parts.

8. Device according to one of the preceding claims, **characterized in that** the second curve (410, 510) is designed as a plate approximately in the shape of a circular ring.

9. Device according to one of the preceding claims, **characterized in that**, in the unloaded state of the parts, the second curve is supported by a projection (406, 408, 411, 506) on a part with the first curve.

10. Device according to one of the preceding claims, with a tubular insert (12) which has a wall corresponding to the difference in thickness between the large diameter (DG) and the small diameter (DK) of filling pipes (FG, FK) in order to allow the filling of a diesel tank with a petrol fuel nozzle through the insert (12).

11. Device according to Claim 10, **characterized in that** the insert (12) can be fitted on the petrol fuel nozzle.

## Revendications

1. Dispositif à introduire dans un tuyau de remplissage d'un réservoir pour un tube de remplissage de grand diamètre, comme barrière pour le remplissage du réservoir à travers un tube de remplissage de petit diamètre au moyen d'un dispositif de sécurité coulissant, pénétrant par le côté dans le tuyau de remplissage et assurant la diminution de la section transversale de celui-ci jusqu'à un diamètre prédéterminable, dans lequel le dispositif de sécurité (4, 40, 400, 500, 600) se compose de plusieurs parties flexibles (7, 70, 401-404, 501, 609) qui sont fixées sur la paroi intérieure du tuyau de remplissage (3), et qui forment ensemble un segment décroissant (6) dans le tuyau de remplissage (3), dont la dimension correspond au grand diamètre (DG) d'un tube de remplissage (FG, FK) vers l'ouverture de remplissage et au petit diamètre (DK) vers l'intérieur du réservoir (1) et le segment (6) se termine en une barrière transversale (8, 80, 410, 510, 610) pour la profondeur d'engagement du tube de remplissage (FK) de petit diamètre (DK), dans lequel les parties flexibles sont fixées de manière pivotante sur un support (5), le support (5) est de forme annulaire et porte deux parties (7, 70, 401-404, 501, 609), ou plus, qui comportent des branches volantes, qui s'étendent vers l'intérieur du réservoir (1) et qui présentent, à leur extrémité, des saillies (8, 80, 406-408, 410, 510, 610) qui s'étendent en direction de l'axe central (A) du tuyau de remplissage, et dans lequel une ou plusieurs plaques élastiques (10, 100, 110, 410, 510, 610) essentiellement fermées et sensiblement annulaires dans l'état déchargé des parties, sont placées sur la barrière ou sur les saillies, **caractérisé en ce que** les parties (7, 70) sont couplées l'une à l'autre par un élément faisant ressort (5, 42) et forment le segment décroissant (6) en étant précontraintes.

2. Dispositif selon la revendication 1, **caractérisé en ce que** les parties sont élastiques et forment, dans leur état déchargé, le segment décroissant (6).

3. Dispositif selon l'une quelconque des revendications précédentes, **caractérisé en ce que** l'élément faisant ressort est un ressort hélicoïdal (40) ou un anneau (41) ou un fil.

4. Dispositif selon l'une quelconque des revendications précédentes, **caractérisé en ce que** le support (5) et les parties sont réalisés d'un seul tenant en matière plastique ou en métal.

5. Dispositif selon la revendication 1, **caractérisé en ce que** le support (5) est un ressort de torsion annulaire.

6. Dispositif selon l'une quelconque des revendications précédentes, **caractérisé en ce que** les dispositifs de sécurité (400, 500, 600) sont des branches faisant ressort en matière plastique ou en métal (11, 401-404, 501, 609), pénétrant dans le tuyau de remplissage (3), dont au moins une est fixée sur ou à l'extérieur de la paroi du tuyau de remplissage (3), diminue avec un premier arc (403, 404, 409, 509, 609) la section transversale dans le tuyau de remplissage jusqu'au petit diamètre (DK), et comporte un second arc (410, 510, 610) formant barrière transversale pour la profondeur d'engagement du tube de remplissage (FK) de petit diamètre.

7. Dispositif selon l'une quelconque des revendications précédentes, **caractérisé en ce que** le premier et le second arcs sont associés à des parties différentes.

8. Dispositif selon l'une quelconque des revendications précédentes, **caractérisé en ce que** le second arc (410, 510) est formé par une plaque annulaire sensiblement circulaire.

9. Dispositif selon l'une quelconque des revendications précédentes, **caractérisé en ce que**, dans l'état déchargé des parties, le second arc est supporté par une saillie (406, 408, 411, 506) sur une partie comportant le premier arc.

10. Dispositif selon l'une quelconque des revendications précédentes, comportant une pièce rapportée tubulaire (12), qui présente une paroi correspondant à la différence d'épaisseur entre le grand diamètre (DG) et le petit diamètre (DK) de tubes de remplissage (FG, FK), afin de permettre le remplissage d'un réservoir diesel avec un pistolet de remplissage d'essence à travers la pièce rapportée (12).

11. Dispositif selon la revendication 10, **caractérisé en ce que** la pièce rapportée (12) peut être montée sur le pistolet à essence.
